(19) Europäisches Patentamt
European Patent Office
Office européen des brevets

(11) Veröffentlichungsnummer: **0 040 672**
**B1**

(12) # EUROPÄISCHE PATENTSCHRIFT

(45) Veröffentlichungstag der Patentschrift: **20.07.83**

(51) Int. Cl.$^3$: **B 29 D 7/04**

(21) Anmeldenummer: **81101669.0**

(22) Anmeldetag: **07.03.81**

(54) **Breitschlitzextrusionsdüse mit verstellbarem Betriebspunkt.**

(30) Priorität: **21.05.80 DE 3019280**

(43) Veröffentlichungstag der Anmeldung: **02.12.81 Patentblatt 81/48**

(45) Bekanntmachung des Hinweises auf die Patenterteilung: **20.07.83 Patentblatt 83/29**

(84) Benannte Vertragsstaaten: **DE FR GB IT SE**

(56) Entgegenhaltungen:
**DE-A-2 450 662**
**DE-U-7 931 476**
**US-A-3 360 823**
**US-A-4 043 739**

(73) Patentinhaber: **Röhm GmbH, Kirschenallee Postfach 4242, D-6100 Darmstadt 1 (DE)**

(72) Erfinder: **Vetter, Heinz, Dr. Ing., Taunusstrasse 92, D-6101 Rossdorf (DE)**
Erfinder: **Friederich, Ernst, Dipl.-Ing., Am Erlenberg 18, D-6100 Darmstadt (DE)**

**EP 0 040 672 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Breitschlitzextrusionsdüse mit verstellbarem Betriebspunkt

Bei der Extrusion von breiten Folien oder Bändern aus thermoplastischem Kunststoff besteht das Problem, an jeder Stelle des Düsenmundes je Zeiteinheit die gleiche Menge Kunststoff zu extrudieren, andernfalls man eine Folie oder ein Band mit ungleichmässiger Dickenverteilung enthält. Der Formmassenausstoss hängt vom Druckabfall der verschiedenen Fliesswege in der Extrusionsdüse ab. Bei der thermoplastischen Formmasse handelt es sich um eine nicht-newtonsche Flüssigkeit, d. h. die Viskosität im Verteilerkanal hängt von der Fliessgeschwindigkeit ab. Um Zersetzungserscheinungen in der Formmasse zu vermeiden, soll die Schmelztemperatur nicht höher als unbedingt nötig und die Verweilzeit möglichst kurz sein.

Die rechnerische Behandlung unter diesen Voraussetzungen und Forderungen hat zu einem Extrusionsdüsentyp geführt, den J. Wortberg in den IKV-Veröffentlichungen, Band «Extrusion I», Aachen 1979, S. 170–177, beschrieben hat. Die charakteristische Gestalt ist hier in den Figuren 1a und b dargestellt. Sie ist durch einen – nach seiner Form so benannten – «Kleiderbügel-Verteilerkanal» (1) und eine zwischen diesem und dem geraden Düsenmund gelegene Stauinsel (6) und häufig durch einen zusätzlichen Staubalken (9) gekennzeichnet. Die Stauinsel kompensiert den von der Einspeisestelle (3) zum Ende (4) des Verteilerkanals abfallenden Formmassendruck durch eine dem jeweiligen Druck entsprechende Länge $L_i$ des Fliessweges, so dass an dem in Fliessrichtung gelegenen Ende der Stauinsel über die ganze Breite der Düse etwa der gleiche Formmassendruck herrscht. Die dann noch verbleibenden Druckunterschiede lassen sich mit einem flexiblen Staubalken (9) ausgleichen, der mittels einer Reihe von Stellschrauben auf unterschiedliche Höhen $H_4$ eingestellt werden kann.

Die Düsengeometrie kann jeweils nur für einen bestimmten Betriebspunkt, der durch die Schmelzviskosität des Kunststoffes, die Extrusionstemperatur und die Förderleistung gekennzeichnet ist, ausgelegt werden. Geringfügige Abweichungen vom vorgesehenen Betriebspunkt lassen sich meistens noch durch elastisches Verbiegen des Staubalkens ausgleichen. Grössere Abweichungen machen jedoch eine Neukonstruktion der Düse notwendig.

Nach dem der Düsenberechnung zugrundeliegenden mathematischen Modell sollte sich der Betriebspunkt durch eine einstellbare Höhe der Stauinsel in weiteren Grenzen verschieben lassen. Dies würde aber wegen der gekrümmten Begrenzung der Stauinsel zu nahezu unlösbaren Abdichtungsproblemen beim Einpassen des verstellbaren Inseleinsatzes führen.

Es bestand die Aufgabe, eine Breitschlitzextrusionsdüse mit verstellbarem Betriebspunkt herzustellen, bei der verstellbare Einsätze geradlinig begrenzt sind und dadurch dicht schliessend eingepasst werden können. Weiterhin sollte der Herstellungsaufwand dadurch vermindert werden, dass anstelle des «Kleiderbügel-Verteilerkanals», der mit aufwendigen Fräsverfahren hergestellt werden muss, ein geradliniger Verteilerkanal verwendet wird.

Die Lösung der Aufgabe hat zu der im Patentanspruch angegebenen Gestaltung geführt, bei der die Stauinsel auf einem rechteckig begrenzten Einsatz angeordnet ist. Sie beruht auf der Erkenntnis, dass es für jeden Betriebspunkt eine Einstellung des Stauinseleinsatzes gibt, bei der für jeden Strömungspfad die Summe des Druckabfalles im Verteilerkanal und über dem Stauinseleinsatz gleich ist.

Die erfindungsgemässe Düse wird in den Figuren 1 bis 3 näher erläutert und dem Stand der Technik gegenübergestellt.

Figur 1a zeigt einen Querschnitt durch eine herkömmliche Extrusionsdüse mit «Kleiderbügel-Verteilerkanal».

Figur 1b stellt einen rechtwinklig dazu gelegten Querschnitt durch die gleiche Düse längs der Linie B-B in Figur 1a dar.

Figuren 2a und 2b zeigen in entsprechender Schnittdarstellung eine weitere Extrusiondüse nach dem Stand der Technik mit geradem Verteilerkanal und gestufter Stauinsel.

Figuren 3a und 3b zeigen in der gleichen Schnittdarstellung die erfindungsgemässe Extrusionsdüse.

An jedem Ort des Düsenaustritts (5) wird nur dann die gleiche Formmassenmenge je Zeiteinheit ausgetragen, wenn im Innern der Düse jeder Strömungspfad den gleichen Druckabfall hat. H. Görmar (Dissertation RWTH Aachen, 1968) hat gezeigt, dass diese Voraussetzung bei minimaler Verweilzeit der Schmelze in der Düse erfüllt ist, wenn für die Geometrie des Verteilerkanals und der Stauinsel folgende Gleichungen gelten:

$$\text{Verteilerkanal:}\quad R_i = R_o \left(\frac{b}{B}\right)^{1/3} \qquad \text{(a)}$$

$$\text{Stauinsel:}\quad L_i = L_o \left(\frac{b}{B}\right)^{2/3} \qquad \text{(b)}$$

worin B, b, $L_i$, $L_o$, $R_i$ und $R_o$ die im Patentanspruch angegebenen Bedeutungen haben. Der hydraulische Radius $R_o$ bzw. $R_i$ ist definiert durch den Quotienten

$$R_i = \frac{2\,A_i}{U_i} \qquad \text{(c)}$$

wobei $A_i$ die Querschnittsfläche und $U_i$ der Umfang des Verteilerkanals an der Ortskoordinate b sind; für $R_o$ gilt der entsprechende Quotient für die Einspeisestelle (3). Für den Fall eines kreisförmigen Verteilerkanals ist der hydraulische Radius dem Kreisradius gleich. Der Verteilerkanal kann einen nichtkreisförmigen Querschnitt haben.

Die Gleichungen (a) und (b) sind bei der Gestaltung der Verteilerkanäle und Stauinseln bei den bekannten Düsengestaltungen gemäss Figur 1 und 2 ebenso erfüllt wie bei der erfindungsgemässen Gestaltung gemäss Figur 3. Während aber die Düsen nach den Figuren 1 und 2 nur für einen bestimmten Betriebspunkt ausgelegt sind und bei davon abweichenden Betriebsbedingungen keinen gleichmässigen Formmassenaustrag an jeder Stelle des Düsenaustritts erzeugen und sich auch nicht auf geänderte Betriebsbedingungen umstellen lassen, ist die erfindungsgemässe Düse dank des höhenverstellbaren Inseleinsatzes (8) auf unterschiedliche Betriebspunkt einstellbar. Dies ergibt sich aus der Berechnung des Druckabfalls für alle Strömungspfade über die gesamte Düsenbreite. Ohne auf den mathematischen Beweis im einzelnen einzugehen, sei hier nur das überrraschende Ergebnis festgehalten, dass für jeden Betriebspunkt – innerhalb des technisch in Betracht kommenden Bereiches – eine Höheneinstellung des Stauinseleinsatzes (8) möglich ist, bei dem die Summe des Druckabfalls im Verteilerkanal und des Druckabfalls über dem Stauniseleinsatz an jedem Breitenkoordinatenpunkt b konstant ist.

Der Stauinseleinsatz (8) ist ein quaderförmiger Körper, über dessen rechteckige Oberseite sich die kurvenförmig begrenzte Stauinsel (6) erhebt und die Oberseite teilweise überdeckt. Der Höhensprung $\Delta H$ der Stauinsel (6) gegenüber der Oberseite des quaderförmigen Inseleinsatzes (8) ist an jeder Stelle gleich, d. h. die Oberfläche der Stauinsel (6) ist eben und liegt parallel zur Oberseite von (8). Durch den Höhensprung $\Delta H$ werden zwei Massenkanalabschnitte mit den Höhen $H_1$ und $H_2$ geschaffen, deren Grösse durch die Beziehung

$$\Delta H = H_2 - H_1$$

gekoppelt ist. Ihre absolute Grösse kann durch Zug- und Druckschrauben (10) verändert und dadurch den verschiedensten Betriebsvarianten angepasst werden.

Der Druckabfall über dem rechteckigen Inseleinsatz setzt sich zusammen aus dem Druckabfall in dem Kanalabschnitt über der Stauinsel (6) mit der Kanalhöhe $H_1$ und dem Druckabfall in dem Kanalabschnitt über der freiliegenden Oberfläche (7) des Stauinseleinsatzes mit der Kanalhöhe $H_2$.

Der Höhensprung $\Delta H$ kann den 0,1 bis 5-fachen Wert der Höhe $H_3$ des durch die Düsenlippen (5) begrenzten Düsenaustritts haben. In der Mehrzahl der Fälle liegt der optimale Höhensprung zwischen dem 0,1- und dem 0,8-fachen von $H_3$. Bei thermisch sehr stabilen Formmassen bzw. bei niedriger Schmelzviskosität kann ein höherer Wert von $\Delta H$ bis zu der angegebenen Grenze eingestellt werden. Es ist zweckmässig, wenn die Stauinsel an der eintrittseitigen Kante des Inseleinsatzes, d. h. in Berührung mit der geraden Kante (2) des Verteilerkanals beginnt und austrittseitig mit dem Kurvenverlauf gemäss Gleichung (b) begrenzt ist. Man kann aber auch diesen Kurvenverlauf eintrittseitig und die gerade Kante der Stauinsel austrittseitig anordnen. Schliesslich kann die Stauinsel beiderseits in Kurvenform begrenzt sein, sofern Gleichung b erfüllt bleibt.

Da der höhenverstellbare Stauinseleinsatz bereits einen vollkommenen Druckausgleich in der Düse gewährleistet, wird auf einen zusätzlichen Staubalken (9) in der Regel verzichtet.

Der Düsenaustritt wird durch Düsenlippen (5) gebildet, die, wie allgemein üblich, vorzugsweise verstellbar angeordnet sind und dadurch die Herstellung von Folien oder Bändern von unterschiedlicher Dicke zulassen. Die Einstellbarkeit des Betriebspunktes gestattet es weiterhin, die Extrusionstemperatur oder die Extrusionsgeschwindigkeit, d. h. die Ausstossleistung, in wesentlich weiteren Grenzen, als bisher möglich, zu verändern. Ebenso kann man Formmassen mit unterschiedlicher Schmelzviskosität bei der Verarbeitungstemperatur, auf der gleichen Extrusionsanlage verarbeiten. Hierzu wird jeweils die Höheneinstellung des Stauinseleinsatzes so verändert, bis ein gleichförmiger Extrusionsdruck über die ganze Breite des Düsenmundes erreicht ist. Selbst wenn nicht sämtliche Verfahrensparameter frei wählbar sind, kommt ein Extrusionsbetrieb mit einem breit gefächerten Produktionsprogramm mit einer deutlich geringeren Zahl von verschiedenen erfindungsgemässen Extrusionsdüsen zur Bewältigung aller anfallenden Extrusionsaufgaben aus.

Die grössere Vielseitigkeit der erfindungsgemässen Extrusionsdüsen kommt in besonderem Masse den Bedürfnissen eines Betriebstechnikums entgegen, wo grundsätzliche Produktionsmöglichkeiten vorgeprüft werden. In den Extrusionsdüsen von verhältnismässig geringer Breite, z. B. 1 m oder weniger, wie sie für Versuchszwekke bevorzugt werden, lässt sich nur schwer ein in weiten Grenzen elastisch biegsamer Staubalken anbringen. Gerade hier kommt einer staubalkenlosen Ausführung der erfindungsgemässen Extrusionsdüse erhöhte Bedeutung bei, weil sie durch die verstellbare Stauinsel eine grössere Flexibilität der Betriebsbedingungen zulässt als Werkzeuge mit biegesteifem Staubalken und feststehender Stauinsel.

Die Herstellung der erfindungsgemäss aufgebauten Extrusionsdüse mit verstellbarem Stauinseleinsatz verursacht trotz der vergrösserten Variabilität keine höheren Kosten als eine vergleichbare Düse mit feststehender Stauinsel und eingepasstem Staubalken. Der Arbeitsaufwand beim Einpassen der verstellbaren Stauinsel entspricht dem beim Einpassen eines konventionellen Staubalkens. Der Verzicht auf einen Staubalken ist allerdings bei der erfindungsgemässen Düse nicht zwingend. Eine Kostenverminderung gegenüber «Kleiderbügel-Verteilerkanal» ergibt sich aus der einseitig geradlinigen Begrenzung des Verteilerkanals.

**Patentanspruch**

Breitschlitzextrusionsdüse mit verstellbarem Betriebspunkt, enthaltend einen Verteilerkanal (1) mit gerader Austrittskante (2) und mit einem von der Einspeisestelle (3) zum Ende (4) entsprechend der Gleichung

$$R_i = R_o \cdot \left(\frac{b}{B}\right)^{1/3},$$

worin

B die Breite des Verteilerkanals von der Einspeisestelle (3) bis zum Ende (4),
b der vom Ende (4) des Verteilerkanals gemessene Abstand,
$R_0$ der hydraulische Radius des Verteilerkanals an der Einspeisestelle,
$R_i$ der hydraulische Radius des Verteilerkanals im Abstand b vom Ende (4) ist,

abnehmenden Querschnitt und wenigstens eine zwischen dem Verteilerkanal (1) und dem Düsenaustritt mit der Höhe $H_3$ angeordnete Stauinsel (6), deren Länge $L_i$ im Abstand b vom Ende (4) nach der Gleichung

$$L_i = L_o \left(\frac{b}{B}\right)^{2/3},$$

worin $L_0$ die Länge der Stauinsel an der Einspeisestelle (3),
$L_i$ die Länge der Stauinsel im Abstand b vom Ende (4) ist und
b und B die oben angegebene Bedeutung haben, bemessen ist und die sich um einen gleichförmigen Höhensprung $\Delta H$ vom 0,1- bis 5-fachen der Austrittshöhe $H_3$ über die vor bzw. hinter der Stauinsel gelegenen Bereiche des Formmassenkanals erhebt, dadurch gekennzeichnet, dass die Stauinsel (6) auf einem höhenverstellbaren quaderförmigen Einsatz (8) angeordnet ist und sich über dessen freiliegender Oberfläche (7) um den Betrag $\Delta H$ erhebt.

**Claim**

Slot extrusion die with an adjustable operating point, containing a distributor channel (1) with a straight relief edge (2) and with a cross section which decreases from the feed point (3) to the end (4) according to the equation

$$R_i = R_o \cdot \left(\frac{b}{B}\right)^{1/3},$$

wherein

B is the width of the distributor channel from the feed point (3) to the end (4),
b is the distance measured from the end (4) of the distributor channel,
$R_o$ is the hydraulic radius of the distributor channel at the feed point,
$R_i$ is the hydraulic radius of the distributor channel at the distance b from the end (4), and at least one damming island (6) arranged between the distributor channel (1) and the die relief with a height $H_3$, the length $L_i$ thereof at a distance b from the end (4) corresponding to the equation

$$L_i = L_o \left(\frac{b}{B}\right)^{2/3},$$

wherein $L_o$ is the length of the damming island at the feed point (3),
$L_i$ is the length of the damming island at a distance b from the end (4) and
b and B are as hereinbefore defined, and this damming island rises above the areas of the channel for the moulding composition which are located in front of or behind the damming island by a uniform interval of height $\Delta H$ from 0.1 to 5 times the height $H_3$ of the die relief, characterised in that the damming island (6) is arranged on a parallel-ipipedinal insert (8) which is adjustable in height and the island rises above the exposed surface (7) thereof by an amount $\Delta H$.

**Revendication**

Filière d'extrusion plate à point de travail réglable, contenant un canal distributeur (1) dont le bord de sortie (2) est rectiligne et dont la section décroît entre le point d'alimentation (3) et l'extrémité (4) suivant l'équation

$$R_i = R_o \cdot \left(\frac{b}{B}\right)^{1/3},$$

dans laquelle

B est la largeur du canal distributeur à partir du point d'alimentation (3) jusqu'à l'extrémité (4),
b est la distance mesurée à partir de l'extrémité (4) du canal distributeur
$R_o$ est le rayon hydraulique du canal distributeur au point d'alimentation et
$R_i$ est le rayon hydraulique du canal distributeur à la distance b de l'extrémité (4),
et au moins une île de retenue (6), disposée entre le canal distributeur (1) et l'orifice de sortie de la filière de hauteur $H_3$, île dont la longueur $L_i$ à la distance b de l'extrémité (4) est dimensionée d'après l'équation

$$L_i = L_o \left(\frac{b}{B}\right)^{2/3},$$

dans laquelle $L_o$ est la longueur de l'île de retenue au point d'alimentation (3), $L_i$ est la longueur de l'île de retenue à la distance b de l'extrémité (4) et b, B ont les significations données ci-dessus, et qui est surélevée d'une saillie $\Delta H$ de 0,1 à 5 fois la hauteur $H_3$ de l'orifice de sortie par rapport aux régions du canal de matière à mouler situées en

amont ou en aval de l'île de retenue, caractérisée en ce que l'île de retenue (6) est placée sur une pièce rapportée parallélépipédique (8) réglable en hauteur et est surélevée de la hauteur ΔH par rapport à la surface libre (7) de cette pièce rapportée.

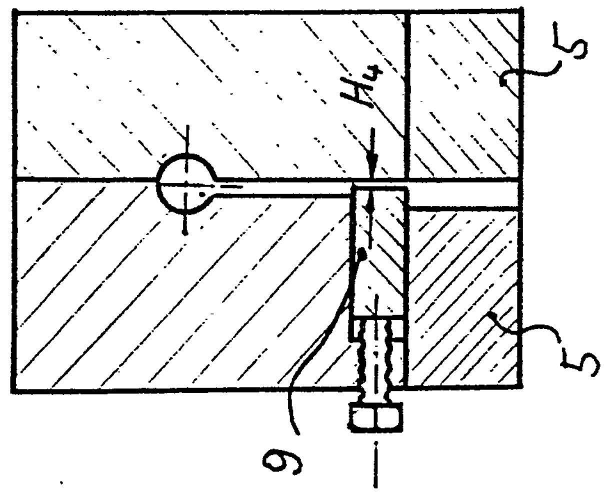


Fig 1b

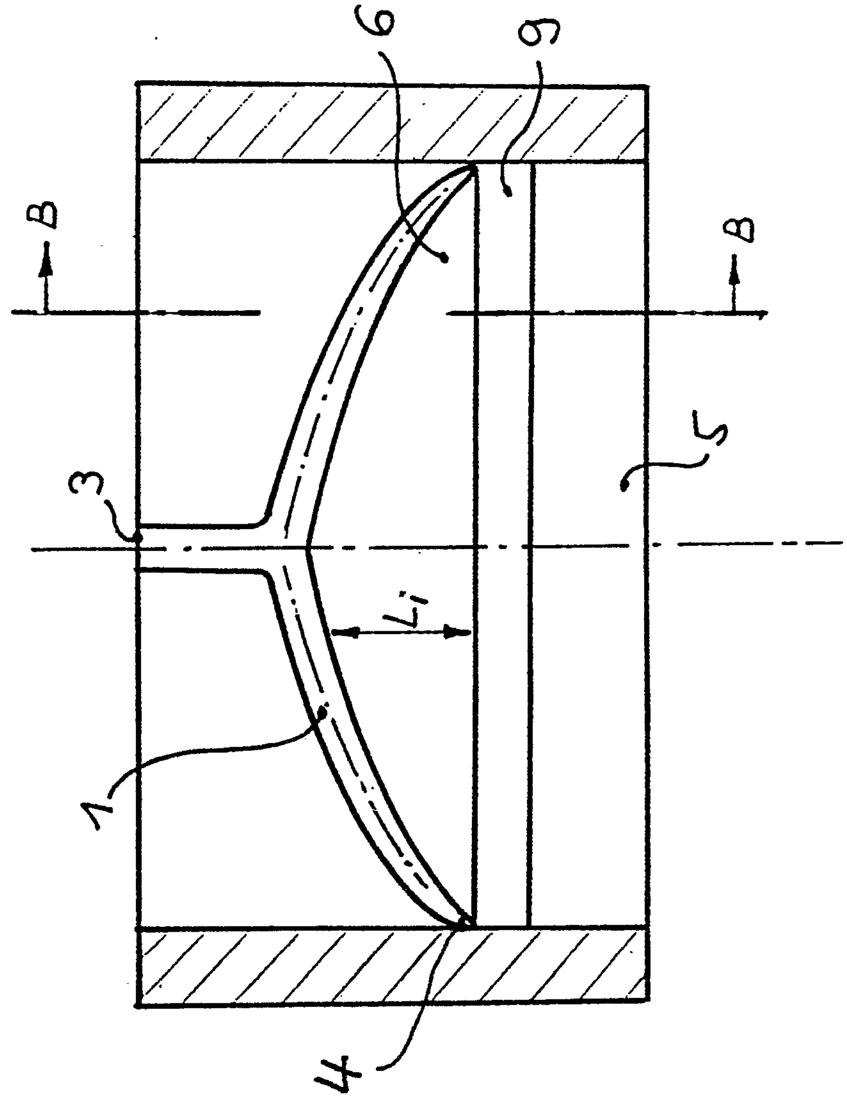


Fig 1a

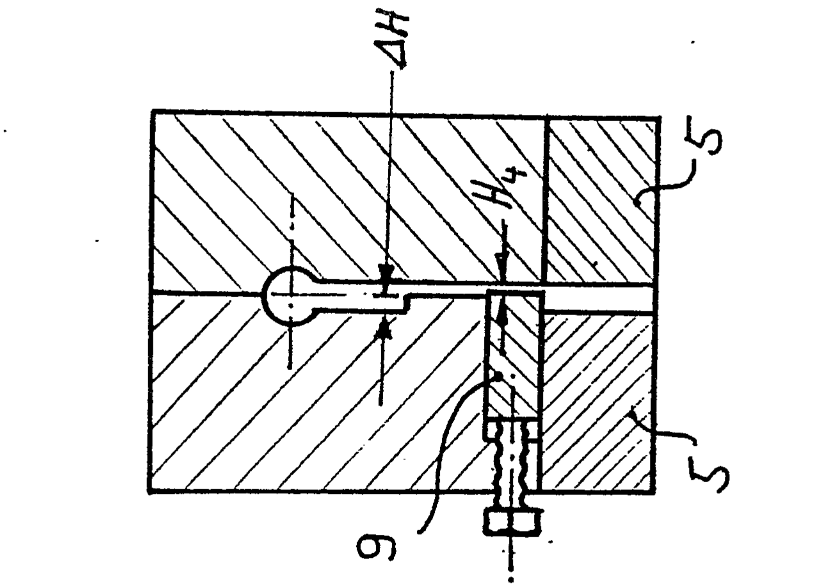


Fig 2b

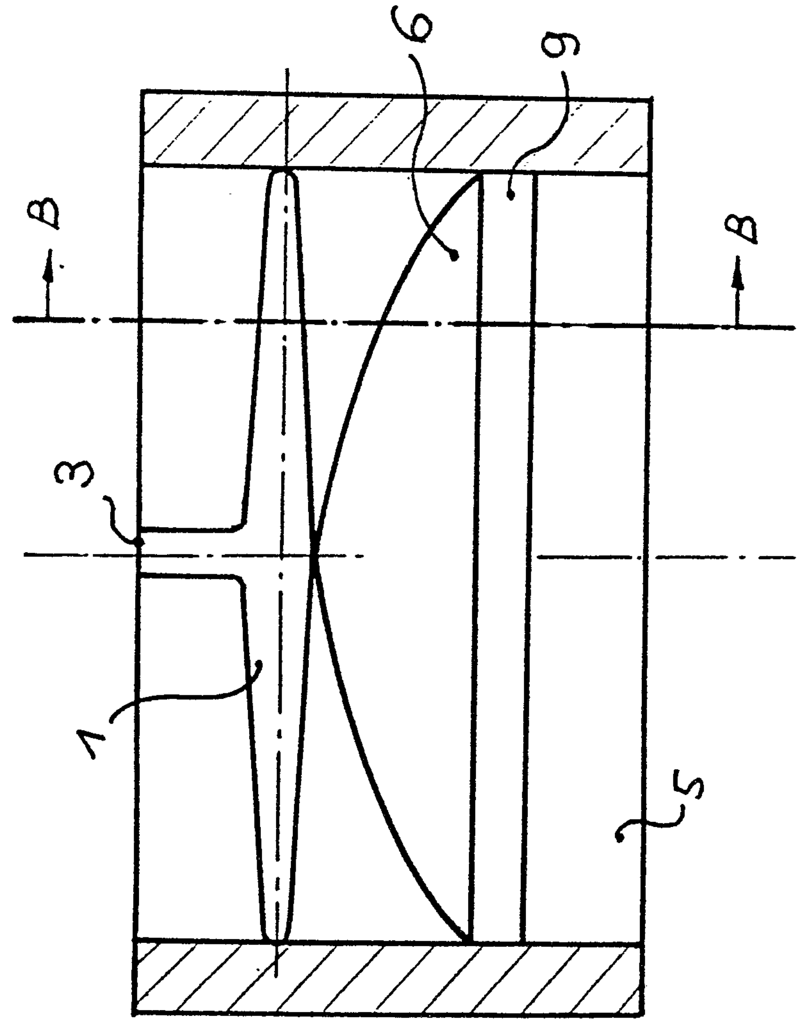


Fig 2a

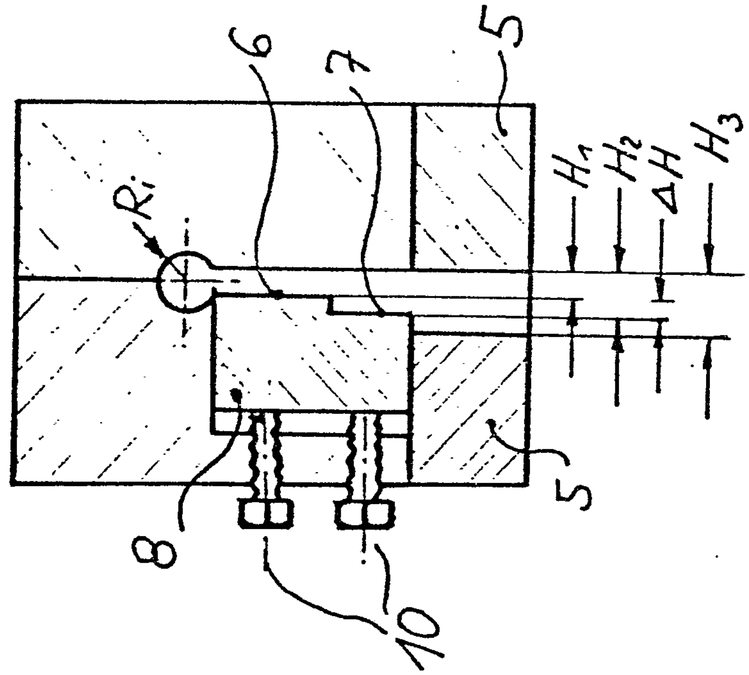


Fig 3b

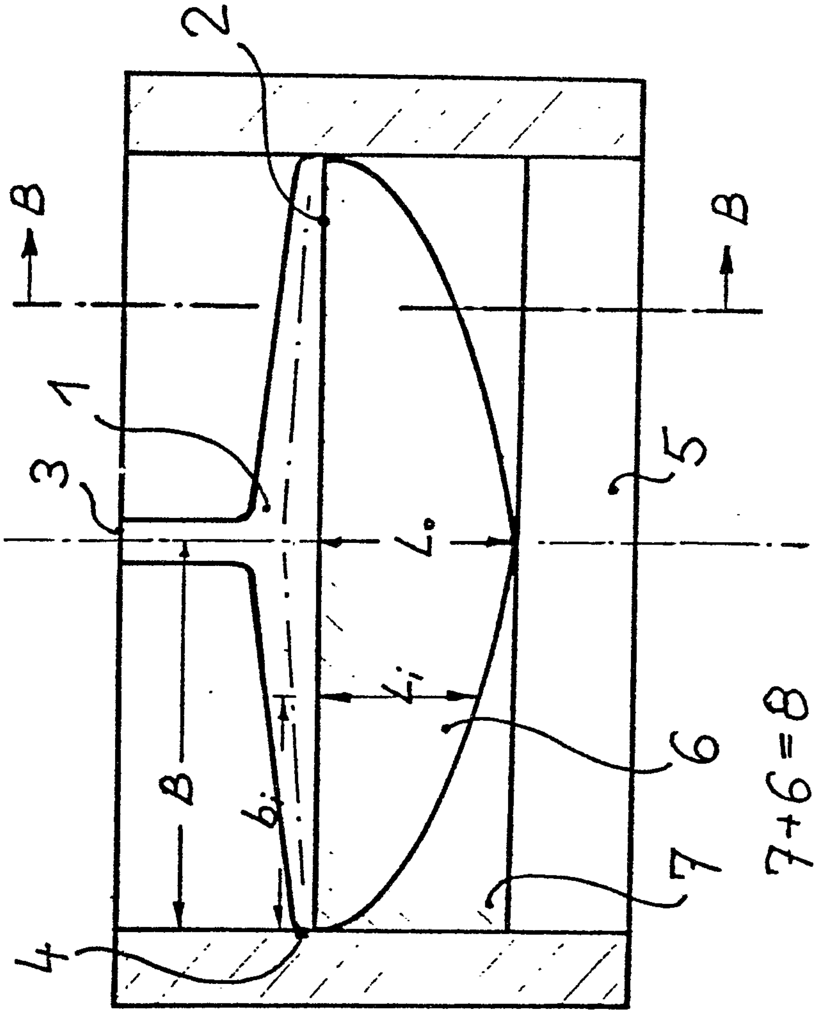


Fig 3a